# NOUVEAU FASCICULE DE BREVET EUROPEEN

(11) **EP 1 608 216 B2**
(45) Date de publication et mention de la décision concernant l'opposition: **22.08.2018**
(45) Mention de la délivrance du brevet: 27.07.2011
(21) Numéro de dépôt: 04742324.9
(22) Date de dépôt: 23.03.2004
(51) Int. Cl.: A01G 17/02

(54) **PROCEDE ET DISPOSITIF D'ANALYSE DE LA STRUCTURE ET DE LA CONSTITUTION DE RANGS DE VIGNE**
VORRICHTUNG UND VERFAHREN FÜR DIE ANALYSE DER STRUKTUR UND DES AUFBAUS DER WEINREBENREIHEN
METHOD AND DEVICE FOR ANALYSIS OF THE STRUCTURE AND THE COMPOSITION OF ROWS OF VINES

(30) Priorité: 31.03.2003 FR 0303944
(43) Date de publication de la demande: 28.12.2005
(73) Titulaire: PELLENC, 84120 Pertuis (FR)
(72) Inventeur: PELLENC, Roger, 84120 Pertuis (FR)
(74) Mandataire: Nuss, Laurent
(86) Numéro de dépôt international: PCT/FR2004/000714
(87) Numéro de publication internationale: WO 2004/089063

(56) Documents cités:
- EP-A- 0 974 262
- EP-A- 1 112 679
- EP-A1- 0 974 262
- EP-A1- 1 004 240
- EP-A2- 1 958 058
- WO-A1-99/40419
- DE-A- 19 530 356
- DE-A- 19 723 770
- DE-A- 19 960 044
- DE-A1- 3 739 787
- DE-A1- 3 823 007
- DE-A1- 3 900 221
- DE-A1- 3 900 223
- DE-A1- 19 530 356
- DE-A1- 19 723 770
- DE-A1- 19 960 044
- DE-T2- 3 884 385
- DE-T3- 69 322 277
- FR-A- 2 806 583
- FR-A- 2 814 911
- FR-A1- 2 806 583
- SU-A1- 1 545 992

## Description

La présente invention concerne un procédé et un dispositif d'analyse de la structure et de la constitution de haies culturales palissées, à savoir des rangs de vigne.

Ce procédé et ce dispositif sont plus particulièrement destinés à la mise en oeuvre et à l'équipement de machines mobiles appelées à travailler en continu dans les plantations palissées, à savoir des rangs de vignes.

L'invention englobe également les machines et plus précisément les machines agricoles comportant application de ce procédé et de ce dispositif.

L'analyse de la structure des haies culturales ou fructifères obtenue par la mise en oeuvre du procédé et du dispositif de l'invention peut être utilisée pour optimiser les résultats de différentes interventions mécaniques ou manuelles à effectuer sur ces haies, simultanément à l'examen de la structure de celles-ci, ou postérieurement.

L'invention peut être avantageusement appliquée à l'équipement des machines agricoles agencées et utilisées pour le prétaillage de la vigne palissée. Pour cette raison, la référence à une machine de prétaillage, dans la suite du présent exposé, ne saurait avoir un caractère limitatif.

On rappelle que l'objectif de prétaillage mécanique de la vigne est de simplifier le travail ultérieur du tailleur en éliminant le maximum de bois avant la taille manuelle. Lors de cette opération mécanique préparatoire, les bois ou sarments dont les vrilles sont fixées aux fils du palissage, sont sectionnés et dégagés. Les principales difficultés de ce travail consistent à :
- assurer le passage des piquets qui créent un obstacle à l'avancement des organes de coupe, la contrainte étant que l'action de la machine ne doit pas être destructrice vis-à-vis des piquets et des fils de palissage ou de ses propres organes de coupe ;
- pour les vignes cultivées en cordon, ne pas endommager le cordon et, notamment, ne pas couper les yeux fructifères.

La plupart des machines de prétaillage actuelles utilisent des systèmes de coupe rotatifs, les machines à barre de coupe étant peu répandues car leur dégagement est moins rapide au passage des piquets.

Selon le type le plus courant de machines équipées de systèmes de coupe rotatifs, le sectionnement des bois est assuré par au moins un empilement de disques d'émiettage comprenant un ameneur circulaire échancré dont la périphérie forme des doigts. A l'intérieur des disques, des lames fixes (EP-0 312 126) ou une scie circulaire (FR-2.576.481) assurent le sectionnement des bois, en association avec les doigts. Les outils de coupe ainsi constitués sont empilées sur deux arbres verticaux se plaçant de part et d'autre de l'axe du palissage lors des opérations de prétaillage. Les organes rotatifs coopérant à l'action de coupe sont disposés en quinconce et se croisent légèrement en cours de travail ; le disque inférieur de chaque empilement pouvant être constitué par un disque sécateur pour une meilleure finition.

A l'entrée d'un rang de ceps, ainsi qu'à la sortie de ce rang, les empilements de disques sont écartés pour ne pas couper les fils de culée. Les fils de palissage doivent être correctement installés pour ne pas être accrochés ou sectionnés pendant le fonctionnement de la machine sur le rang.

Au passage des piquets présentant un diamètre adéquat, souvent exécutés en bois ou en béton, les disques roulent sur ces derniers et s'écartent automatiquement, la pression sur les piquets étant réglable, de manière que la rencontre d'une densité importante de sarments ne provoque pas l'ouverture non souhaitable de la tête de coupe ; par contre, l'effort au passage des piquets ne doit pas être excessif pour ne pas risquer de les endommager.

Cependant, lorsque les piquets sont constitués par des profilés acier de faible section, par exemple par des cornières de 30 mm, l'écartement des empilements de la tête de coupe au passage des piquets, s'opère obligatoirement manuellement, car ces derniers pourraient détériorer gravement les outils de coupe en pénétrant dans les doigts des ameneurs rotatifs. Dans une telle situation, les viticulteurs préfèrent, dans la plupart des cas, utiliser des machines de prétaillage à commande d'ouverture manuelle, ce qui exige, de la part des conducteurs de ces machines une vigilance de tous les instants. Très souvent, pour ne pas prendre de risques, les conducteurs préfèrent ouvrir et fermer la tête de coupe à distance des piquets avec une bonne marge de sécurité, ce qui présente l'inconvénient de laisser une quantité assez importante de bois non coupés.

Lorsque les vignes sont cultivées en cordon (cordon de Royat), par exemple, une application avantageuse de l'invention est de permettre de maintenir les organes de coupe de la prétailleuse au-dessus et à distance convenable du cordon, afin d'écarter tout risque d'endommagement de ce dernier et d'éviter l'élimination d'yeux fructifères qu'il est souhaitable de garder, tout en conservant des bois de taille les plus courts possible.

En effet, s'il est possible de régler la hauteur des organes de coupe de la machine, à l'entrée d'un rang, leur position par rapport au cordon peut se trouver modifiée durant leur déplacement sur ce rang, en raison des inégalités du sol, de sorte qu'en cas de descente soudaine résultant du passage de ladite machine dans un creux du terrain, le cordon peut se trouver endommagé ou dépouillé de ses yeux fructifères.

Une autre application intéressante de l'invention est d'effectuer une mesure de la vitesse d'avancement de la machine, de sorte à rendre possible une adaptation permanente des conditions de fonctionnement des outils de celle-ci à la vitesse d'avancement mesurée.

En effet, si l'on considère les machines de prétaillage du genre précité, la vitesse périphérique des disques doit être adaptée à la vitesse d'avancement, une vitesse de rotation excessive des disques ayant pour effet de tirer les bois vers l'arrière, alors qu'une vitesse trop faible desdits disques a pour conséquence de pousser la végétation vers l'avant. L'adaptation de la vitesse de rotation des disques à la vitesse d'avancement de la machine s'obtient au moyen d'un diviseur de débit. En pratique, le viticulteur choisit une vitesse de travail et règle en conséquence le diviseur avant d'entrer dans la vigne, de sorte que si cette vitesse varie durant les trajets, les organes de coupe ne travaillent pas constamment dans les meilleures conditions, ce qui occasionne des casses de bois et, parfois, l'arrachement de pieds de vigne.

Une autre exploitation avantageuse de l'analyse de la structure des rangs de vignes est de permettre une mesure de la vigueur des plants de vigne.

La culture de la vigne évolue vers un concept de "Viticulture de Précision" (Marque déposée) qui consiste à relever, au moyen de capteurs, toutes les caractéristiques importantes de la plante permettant de considérer celles-ci sur une cartographie GPS, en vue d'une optimisation à court et à long termes de la récolte.

Les caractéristiques des pieds de vigne qui sont essentiellement la quantité de raisins récoltée, le sucre de ces raisins, leur acidité et la vigueur de la plante sont collectées dans une base de donnée que l'on appellera conventionnellement "pieds de vigne" et sont ensuite utilisées pour définir les conditions dans lesquelles seront effectuées la taille, la fertilisation, la sélection des raisins pour une meilleure vinification, etc.

Connaître la vigueur de chaque plante est une donnée qui intéresse tout viticulteur qui veut améliorer la qualité de son produit. En effet, le plan de vigne se développe, entre autres, en fonction de la fertilisation et de la nature du terrain. Ce développement se traduit par la pousse, pendant la période végétative, de sarments qui perdront leurs feuilles l'hiver suivant.

On mesure la vigueur de la vigne lorsque l'on taille celle-ci ; les sarments taillés sont récupérés, coupés en petits morceaux et pesés. Le poids de ces sarments va représenter la caractéristique de vigueur. Cela est obtenu en comparant les pieds de vigne, les uns par rapport aux autres, en déterminant les vigueurs maigres par rapport aux vigueurs abondantes. On sait qu'à chaque vigueur doit correspondre une certaine quantité de raisins produits par la plante.

La taille de la vigne a pour fonction de laisser sur chaque cep un certain nombre de bourgeons qui dans le cadre de leur développement vont permettre de déterminer le volume de la récolte. On sait par exemple que la vigne doit avoir en moyenne 28.000 bourgeons par hectare, après l'opération de taille. A l'heure actuelle, on répartit ces 28.000 bourgeons/hectare par le nombre de pieds/hectare, ce qui détermine uniformément pour chaque pied le nombre d'yeux à garder par pieds.

Sachant que dans une parcelle, compte tenu de l'hétérogénéité du sol et des conditions d'exposition, la vigueur n'est pas uniforme, il y a lieu, dans la viticulture moderne, de répartir les 28.000 yeux/hectare, non pas uniformément mais en fonction de la vigueur des pieds.

Les mesures faites dans le cadre de la viticulture de précision doivent permettre de mesurer la vigueur de chaque pied de vigne, de façon à lui attribuer un nombre d'yeux adéquat. Il est donc nécessaire d'évaluer cette vigueur par pied d'une façon automatique car il est impensable de réaliser l'opération de pesage des bois pour chaque pied.

Dans le document EP-0.974.262 est décrit un appareil de taille automatisée de plantes en forme d'arbres, telles que plants de vigne comprenant un châssis supportant un dispositif de taille, un dispositif d'acquisition d'images permettant de relever la position d'une plante en forme d'arbre par rapport au dispositif de taille, et une unité de traitement prévue pour envoyer des signaux de commande pour le réglage de la position dudit dispositif de taille, en fonction des images relevées du tronc ou branche principale de ladite plante par rapport audit dispositif de taille. Le dispositif d'acquisition d'images est constitué par une paire de caméras de télévision placées de façon à pouvoir être pointées vers le haut en faisant un angle entre elles.

L'appareil de taille automatisée décrit dans ce document met en oeuvre un système d'acquisition d'image (télévision) qui ne fonctionne pas sans éclairage (lumière du jour ou éclairage de substitution) et qui fonctionne mal sous une forte luminosité (résultat par exemple d'un fort ensoleillement) nécessitant l'utilisation d'un écran. Il ne fonctionne pas la nuit sans mise en oeuvre d'un éclairage de substitution à la lumière solaire.

Il ne semble pas qu'un appareil de taille automatisée selon le document EP-0.974.262 ait été mis sur le marché, de sorte qu'il n'existe pas, à la connaissance de la Déposante, dans le domaine du machinisme agricole, des procédés et dispositifs capables d'effectuer, aussi bien de jour que de nuit, des analyses de la structure des haies fructifères telles que des rangs de vigne, et d'appliquer les informations résultant de ces analyses :
- à l'obtention de l'ouverture automatique de la tête de coupe des machines de prétaillage se déplaçant en enjambant le rang de vigne, au passage des piquets, lorsque ceux-ci sont réalisés en fer cornière ou présentent un diamètre réduit autorisant leur pénétration dans les doigts des disques d'émiettage ;
- à l'adaptation constante de la vitesse de rotation des disques à la vitesse d'avancement de la machine ;
- au respect de l'intégrité du cordon et des yeux fructifères à conserver, pour les vignes cultivées en cordon ;
- à la mesure de la vigueur de la vigne.

D'autre part, la nécessité de procéder à une ouverture manuelle de la tête de coupe au passage des piquets ne permet pas d'effectuer un travail à grande vitesse avec les machines actuelles. En effet, soit on retarde le plus possible l'ouverture de la tête de coupe afin de sectionner la plus grande quantité de sarments possible et, dans ce cas, la tête de coupe vient frapper lesdits piquets en provoquant le déchaussement progressif de ces derniers, soit on anticipe l'ouverture de ladite tête de coupe et, dans ce cas, on laisse une quantité de végétation importante sur les ceps proches desdits piquets.

La présente invention se propose de remédier aux insuffisances susmentionnées.

Selon l'invention, l'analyse de la structure des rangs de vigne comprenant des piquets, est obtenue grâce à un procédé suivant lequel on dispose, de préférence à l'avant de la tête de travail d'une machine mobile appelée à travailler en continu dans les plantations palissées, à savoir des rangs de vigne, un système de vision artificielle fonctionnant en transmission directe, comprenant, d'une part, au moins un émetteur avant et un émetteur arrière de rayons lumineux et, d'autre part, au moins un récepteur avant et un récepteur arrière de rayons lumineux, en considérant le sens d'avancement de la machine équipée de ce système de vision, et configuré pour permettre de déterminer les occultations de lumière entre lesdits émetteurs de rayons lumineux et lesdits récepteurs de rayons lumineux placés face à face de part et d'autre du rang de vigne, en ce que chaque émetteur avant et arrière émet, en alternance, par exemple pendant une durée de l'ordre de 500 µs, une lumière modulée à une fréquence correspondant à la fréquence d'accord à une fréquence correspondant à la fréquence d'accord des récepteurs avant et arrière respectivement, et en ce que les informations générées par ces occultations de lumière sont traitées par un système électronique d'analyse programmé ou configuré pour analyser les éléments de la structure du rang de vigne, et cela aussi bien de jour que de nuit et en ce que l'on s'affranchit, dans le système de vision artificielle, de l'influence de la lumière solaire parasite, en utilisant une lumière modulée périodiquement par le ou les émetteurs, les récepteurs n'étant sensibles qu'à la lumière modulée et non à la composante continue de la lumière et/ou l'on réduit l'importance de la lumière parasite en choisissant des longueurs d'onde d'émission et de réception pour lesquelles la lumière solaire est relativement faible, c'est-à-dire en dehors du spectre visible, soit une longueur d'onde inférieure à 400 nm ou supérieure à 750 nm, et, par exemple, une longueur d'onde de l'ordre de 950 nm, pour lequel le rayonnement solaire reçu est particulièrement faible.

Selon une autre disposition caractéristique du procédé de l'invention, le système électronique d'analyse est programmé ou configuré pour traiter les informations générées par les occultations de lumière, afin de mesurer la vitesse d'avancement de la machine et d'ajuster la vitesse de rotation des outils tournants de ladite machine, en fonction de la vitesse d'avancement mesurée.

Selon une autre disposition caractéristique du procédé de l'invention, le système électronique d'analyse est programmé ou configuré pour traiter les informations générées par les occultations de lumière, afin de discriminer les piquets de la haie.

Selon une autre disposition caractéristique du procédé de l'invention, le système électronique d'analyse est programmé ou configuré pour traiter les informations générées par les occultations de lumière, afin de détecter la position du cordon, dans les vignes ou autres plantes cultivées en cordon.

Selon une autre disposition caractéristique du procédé de l'invention, le système électronique d'analyse est programmé ou configuré pour utiliser les informations générées par les occultations de lumière, afin d'effectuer une mesure de la vigueur des plantes.

Le dispositif d'analyse de la structure de rangs de vigne comprenant des piquets selon l'invention comprend un système de vision artificielle fonctionnant en transmission directe, et comprenant :
- d'une part, un module émetteur de rayons lumineux constitué d'au moins un émetteur avant et d'un émetteur arrière, et, d'autre part, un module récepteur de rayon lumineux constitué d'au moins un récepteur avant et d'un récepteur arrière, en considérant le sens d'avancement de la machine équipée de ce système de vision, la distance séparant l'émetteur avant et l'émetteur arrière étant inférieure à la largeur desdits piquets, ce système de vision artificielle étant agencé de sorte que lorsqu'il est monté sur une machine, un ou plusieurs de ses composants optoélectroniques puisse(nt) être disposé(s) face à face, de part et d'autre du rang de vigne enjambée par cette dernière, ledit dispositif comprenant encore un système électronique d'analyse programmé ou configuré pour traiter les informations générées par les occultations de lumière, pour visualiser et analyser les éléments du rang de vigne, et cela aussi bien de jour que de nuit, et en ce que l'on s'affranchit de l'influence de la lumière solaire parasite en utilisant une lumière modulée périodiquement par les émetteurs, les récepteurs n'étant sensibles qu'à la lumière modulée et non à la composante continue de la lumière et en ce que le faisceau lumineux issu du système de vision artificielle est proche de 950 nm et chaque récepteur est sensible à tout faisceau incident ayant une longueur d'onde d'environ 950 nm.

D'autres dispositions caractéristiques avantageuses du procédé et du dispositif de l'invention, sont énoncées dans les revendications dépendantes et décrites dans la suite du présent exposé.

Le procédé et le dispositif d'imagerie mobile selon l'invention ont généralement pour avantages, notamment dans leur application à la mise en oeuvre et à l'équipement des machines de prétaillage de la vigne :
- de permettre la détection des piquets, quels que soient leur nature (bois, métal, plastique), leur géométrie (en L, en T, rond, carré), leur diamètre (généralement compris entre 20 et 250 mm), ainsi que l'ouverture automatique de la tête de prétaillage au passage desdits piquets, en soulageant ainsi le conducteur d'une tâche répétitive réclamant une grande attention, en particulier, lorsque les piquets sont réalisés en fer cornière ;
- de diminuer la quantité de sarments laissés autour des piquets par rapport à une machine travaillant en ouverture manuelle ;
- d'éviter la détérioration des piquets ou des outils de la machine ;
- d'éviter l'endommagement du cordon et l'élimination indésirable d'yeux fructifères ;
- d'autoriser un travail à des vitesses de déplacement plus importantes de la machine ;
- de permettre une mesure automatique de la vigueur de chaque pied de vigne.

Dans l'application de l'invention à la mesure de la vigueur de la vigne, on comprend que chaque barrière optique qui se trouve coupée au passage des bois de taille, génère une information permettant de déterminer la section des sarments qui coupent cette barrière. En prévoyant un nombre relativement important de barrières optiques superposées, il est possible d'obtenir une appréciation intéressante de la surface des sarments coupés par ces dernières. Des tables de corrélation ont été réalisées pour faire correspondre aux sections coupées, une vigueur, et cela pour chaque pied de vigne. Cette corrélation permet une appréciation de la vigueur avec une exactitude de l'ordre de 8 %, ce qui est largement suffisant pour orienter la taille et donc à déterminer le nombre d'yeux à conserver par pied de vigne.

Selon l'invention, les informations communiquées par le système de vision artificielle sont transmises à un ordinateur ou à un calculateur embarqué dans lequel sont enregistrées, avec une grande précision, les coordonnées géographique de chaque pied de vigne obtenues par GPS, et qui permet, sur la base des données correspondantes, d'enregistrer la vigueur lors de l'opération de pré-taillage. Les informations pourront être utilisées utilement par le viticulteur pour optimiser la taille et la fertilisation de sa vigne.

La taille adaptée à la fertilité, doit permettre une récolte optimum au point de vue poids, sucre et acidité, et apporter ainsi aux viticulteurs la possibilité d'avoir une matière première d'excellente qualité pour la vinication, nécessaire pour l'élaboration de grands crus.

Les buts, caractéristiques et avantages ci-dessus, et d'autres encore, ressortiront mieux de la description qui suit et des dessins annexés dans lesquels :
La figure 1 est une vue schématique d'un exemple de configuration du système de vision artificielle de l'invention.
La figure 2 est une vue en perspective illustrant une machine de prétaillage munie du système de vision artificielle, se déplaçant sur un rang de vigne.
La figure 3 est une vue de détail de la figure 2.
La figure 4 est une vue schématique du dispositif assurant l'ouverture et la fermeture de la tête de coupe de la machine au passage des piquets.
La figure 5 est une vue schématique du dispositif assurant la régulation de la vitesse de rotation des outils tournants de la machine en fonction de la vitesse d'avancement de celle-ci.
La figure 6 est une vue schématique du dispositif assurant le positionnement de la tête de coupe de la machine en fonction de la position du cordon du rang de vigne.
Les figures 7A, 7B et 7C sont des vues schématiques illustrant le processus d'identification des sarments par le système de vision artificielle.
Les figures 8A, 8B et 8C sont des vues schématiques illustrant le processus d'identification des piquets par le système de vision artificielle.
Les figures 9A et 9B sont des vues schématiques illustrant le processus de mesure de la vitesse d'avancement de la machine par le système de vision artificielle.
Les figures 10A et 10B sont des vues schématiques illustrant le processus de mesure de la largeur des piquets par le système de vision artificielle.
Les figures 11A et 11B sont des vues schématiques illustrant le processus de mesure du diamètre des sarments par le système de vision artificielle.
La figure 12 est une vue schématique illustrant le processus de mesure de la position du cordon, par le système de vision artificielle de l'invention.

On se reporte auxdits dessins pour décrire des exemples intéressants, quoique nullement limitatifs, de mises en oeuvre du procédé et de réalisations du dispositif d'analyse de la structure de haies fructifères selon l'invention.

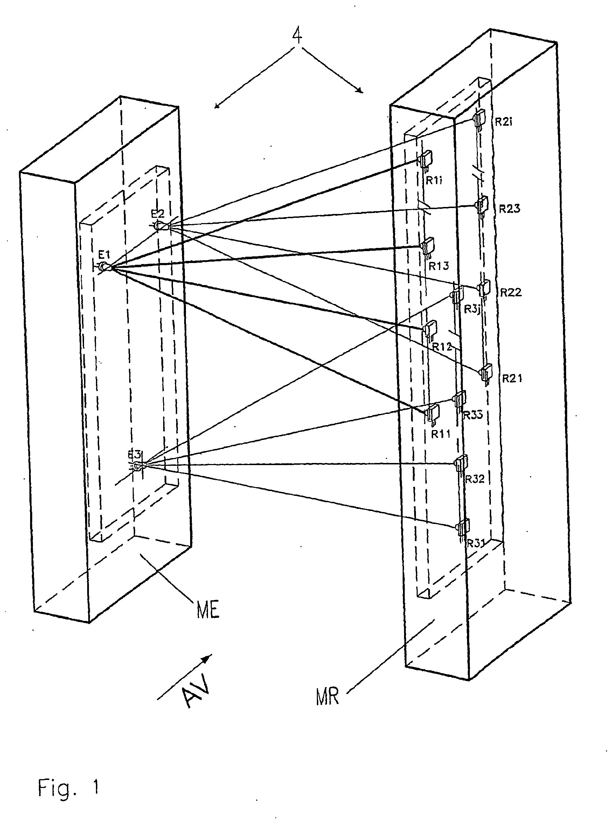

Ce dispositif comprend un système de vision artificielle (figure 1) fonctionnant en transmission directe et comprenant, d'une part, au moins un module émetteur ME comportant au moins un, et de préférence, une pluralité d'émetteurs de rayons lumineux E (E1, E2, E3, ...), et, d'autre part, au moins un module récepteur MR comportant au moins un et, de préférence, une pluralité de récepteurs de rayons lumineux R (R1, R2, R3, ...). De manière avantageuse, ce système de vision artificielle est constitué d'émetteurs et de récepteurs d'infrarouges, et, plus spécifiquement de rayonnement du proche infrarouge.

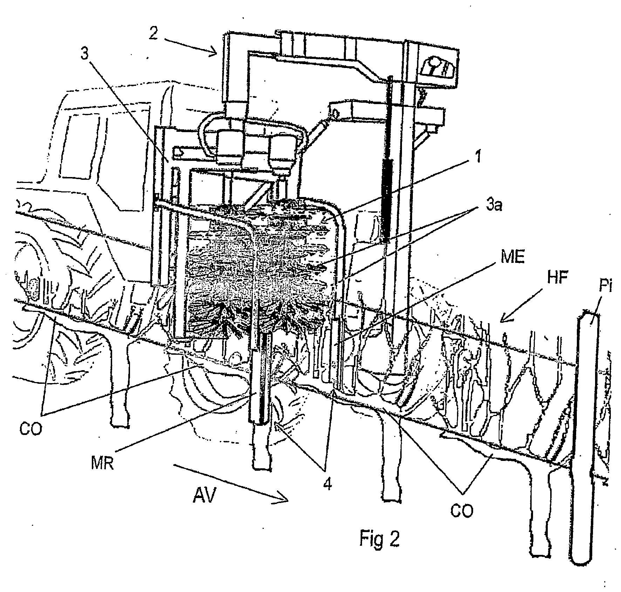

Il est, de préférence, installé à l'avant de la tête de travail d'une machine agricole appelée à travailler en continu dans les plantations palissées, telle que la tête de coupe 1 d'une prétailleuse 2 (figure 2) par exemple du genre décrit dans le document EP-0 312 126 ou dans le document FR-2 576 481.

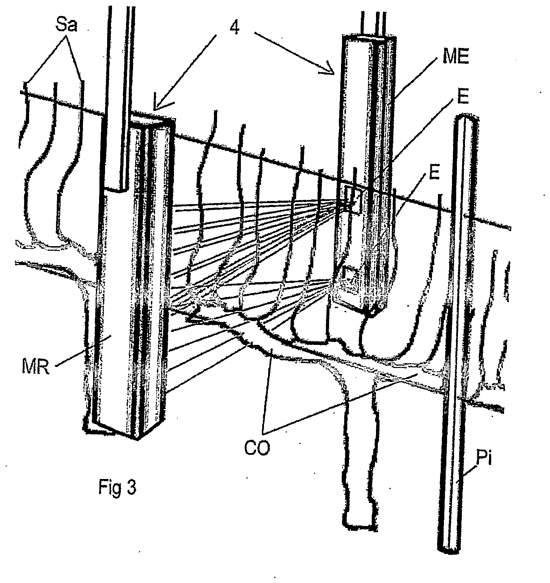

Le module émetteur ME et le module récepteur MR sont disposés à distance l'un de l'autre, par exemple à une distance de l'ordre de 800 mm, de sorte à pouvoir être placés face à face, de part et d'autre de la haie fructifère HF (figures 2 à 5), lorsque la machine se déplace le long de ladite haie. Ils sont fixés sur des éléments verticaux 3a du châssis 3 de la machine, à l'aide de moyens, connus en soi, permettant un réglage de leur position, principalement en hauteur, par rapport audit châssis.

Selon l'exemple de configuration du système de vision 4 représenté à la figure 1 :
- le module émetteur comporte, d'une part, à sa partie supérieure, deux émetteurs espacés alignés horizontalement et que l'on nommera, respectivement, émetteur avant E1 et émetteur arrière E2, dans la suite de la description, et, d'autre part, en partie basse, un émetteur E3 ; l'espace "e" séparant les émetteurs E1 et E2 est déterminé pour être inférieur à la largeur des plus petits piquets Pi utilisés pour le palissage des haies fructifères HF, cet espace "e" étant, par exemple, de l'ordre de 20 mm ;
- le module récepteur comporte trois rangées verticales ou colonnes de récepteurs que l'on nommera respectivement, rangée avant (récepteur R11, R12, R13, ... R1i), rangée arrière (récepteurs R21, R22, R23, .., R2i) et rangée intermédiaire (récepteurs R31, R32, R33, ..., R3j), le récepteur inférieur R31 de cette dernière étant placé en partie basse dudit module récepteur.

Les rangées verticales ou colonnes de récepteurs peuvent comprendre, chacune, un nombre relativement important de récepteurs. Par exemple :
- la rangée verticale avant R11, R12, R13, ..., peut être constituée de douze récepteurs ;
- la rangée verticale arrière R21, R22, R23, ..., peut également comprendre douze récepteurs ;
- la troisième rangée de récepteurs R31, R32, R33, ..., peut comporter treize récepteurs.

Les récepteurs de chacune des trois rangées verticales peuvent être espacés d'une distance qui peut être comprise entre 20 mm et 40 mm, dans la direction verticale.

La troisième rangée R31, R32, R33, ..., occupe une position intermédiaire sur l'exemple représenté à la figure 1, mais elle pourrait occuper une position différente par rapport aux deux autres, dans le système de vision artificielle.

Bien entendu, le système de vision pourrait comporter un nombre différent d'émetteurs et de récepteurs répartis autrement. Il serait par exemple possible de réaliser le système de vision sous forme de deux modules comportant à la fois un ou plusieurs émetteurs et un ou plusieurs récepteurs, chaque émetteur émettant des signaux qui ne sont reçus que par des récepteurs orientés sur lesdits émetteurs.

De manière avantageuse, le faisceau de lumière de base est composé d'émetteurs et de récepteurs d'infrarouge ou de rayonnement du proche-infrarouge.

Selon l'invention, on s'affranchit de la lumière parasite en utilisant une lumière modulée périodiquement par les émetteurs, les récepteurs n'étant sensibles qu'à la lumière modulée et non à la composante continue de la lumière.

La lumière du soleil, qui est une source parasite pour notre système de vision, est atténuée sensiblement par l'atmosphère au dessus de 750 nm, c'est-à-dire dans l'infrarouge, avec notamment un pic d'absorption au voisinage de 950 nm. Afin que le faisceau issu du système de vision puisse être distingué de la lumière solaire, il est apparu avantageux d'utiliser un faisceau lumineux proche de 950 nm. On a donc choisi, pour chaque émetteur une diode infrarouge qui, lorsqu'elle est parcourue par un courant, émet une lumière d'une longueur d'onde égale à 950 nm. On excite cette diode avec un signal électrique périodique correspondant à une fréquence dite "fréquence de modulation". La fréquence de modulation peut être fixée dans la plage comprise entre 30 et 56 kHz.

Chaque récepteur R (photo-récepteur série TSOP de Vishay Telefunken) est sensible à tout faisceau incident ayant une longueur d'onde d'environ 950 nm. Il fournit, en sortie, un signal électrique actif uniquement si la fréquence de modulation du faisceau incident correspond à sa fréquence propre. Toutes les sources lumineuses parasites (soleil, lampes à incandescence ou fluorescentes) qui, par nature ou par construction, ne sont pas modulées à cette fréquence, ne donnent aucun signal actif en sortie du module photo-récepteur et sont donc intégralement filtrés.

Chaque émetteur E1 (avant), E2 (arrière) émet, en alternance, pendant une durée de l'ordre de 500 µs, une lumière modulée, par exemple, à une fréquence d'environ 32 kHz. Cette fréquence est la fréquence d'accord des récepteurs. La rangée avant de récepteurs R11, R12, R13, ..., R1i ne prend que les signaux issus de l'émetteur avant E1, tandis que la rangée arrière de récepteurs R21, R22, R23, ..., R2i ne prend que les signaux issus de l'émetteur arrière E2.

D'autre part, la rangée intermédiaire de récepteurs R31, R32, R33, ..., R3j ne prend que les signaux issus de l'émetteur inférieur E3, conçu pour émettre, par exemple toutes les 500 µs, une lumière modulée à une fréquence correspondant à la fréquence d'accord des récepteurs de la troisième rangée verticale R31, R32, R33, .... Chaque récepteur fournit un état inactif correspondant à un rayon non occulté et donc à l'absence d'obstacle entre émetteur et récepteur. A l'inverse, quand il n'est pas excité par un rayon incident, il fournit un état actif correspondant à la présence d'un obstacle entre émetteur et récepteur.

Selon l'invention, les occultations de lumière sont traitées par un système électronique d'analyse programmé ou configuré pour visualiser les éléments de la structure d'une haie fructifère ou haie culturale :
- pour mesurer la vitesse d'avancement de la machine ; et/ou
- pour discriminer les piquets de la haie ; et/ou
- pour détecter la position du cordon ; et/ou
- pour effectuer une mesure de la vigueur des plantes.

Le système électronique d'analyse 7 est connecté :
- à l'électro-distributeur 9 de commande du vérin 6 qui assure les mouvements d'écartement ou de rapprochement des ensembles de taille 14 ;
- à la valve de régulation de débit 11 du circuit hydraulique d'alimentation des moteurs hydrauliques 12 assurant l'entraînement en rotation des ensembles de taille tournants 14 ;
- à l'électro-distributeur 16 de commande du vérin 17 qui assure les mouvements verticaux des ensembles de taille 14.
- à l'ordinateur de viticulture de précision (non représenté) capable de gérer les données de détermination de la vigueur des plantes.

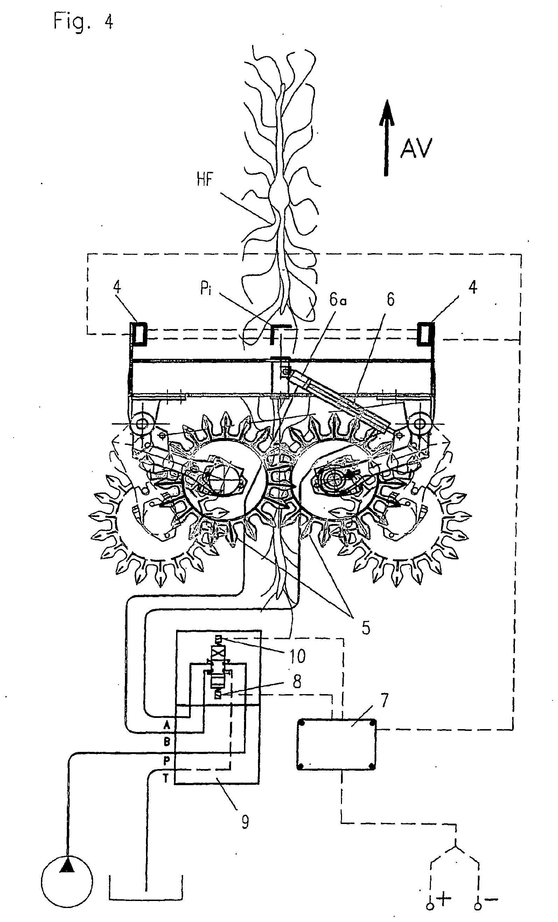

La figure 4 montre le système de vision artificielle 4-4 installé à l'avant de la tête de coupe d'une machine de prétaillage dont on voit notamment les éléments de taille rotatifs 5 et le vérin hydraulique 6 assurant le rapprochement desdits ensembles en position de travail ou l'écartement de ces derniers au passage des piquets Pi.

Le système de vision artificielle 4-4 disposé de part et d'autre de la haie fructifère (rang de vigne ou autre) avance le long de celle-ci (selon flèche AV) ce qui génère des informations qui sont analysées par un système électronique 7 afin de discriminer les piquets Pi de la haie, de définir leur largeur et la vitesse à laquelle ils sont passés devant le système de vision 4-4. Une fois ces informations définies, le système électronique 7 calcule :
- 1/ le moment où il doit envoyer un courant électrique vers la commande 8 de l'électro-distributeur 9 permettant le passage du fluide hydraulique vers la chambre arrière 6a du vérin 6 qui par l'intermédiaire d'une transmission mécanique assure l'ouverture ou écartement des éléments de taille 5 au passage d'un piquet Pi ;
- 2/ le moment où il doit envoyer un courant électrique vers la commande 10 de l'électro-distributeur 9 permettant le passage du fluide hydraulique vers la chambre avant du vérin 6 qui par l'intermédiaire d'une transmission mécanique assure la fermeture ou le rapprochement des éléments de taille 5, après passage du piquet.

Ce calcul permet ainsi d'écarter et de refermer les éléments de taille le plus près possible des piquets de la haie fructifère, sans les toucher pour ne pas les détériorer tout en laissant le moins possible de sarments non sectionnés.

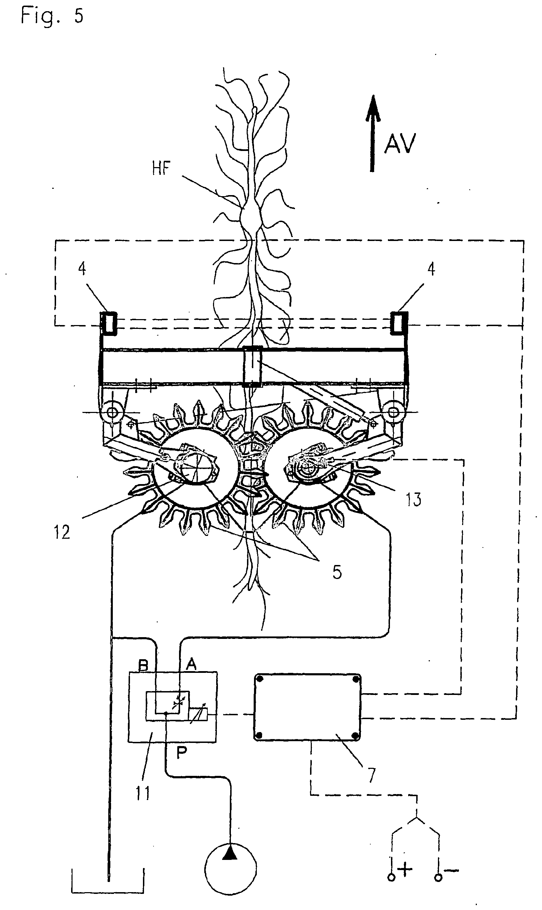

La figure 5 est une vue analogue à la figure 4 illustrant l'application du procédé et du dispositif de l'invention à la mesure de la vitesse d'avancement de la machine et à l'ajustement de la vitesse de rotation des outils de taille de la tête de coupe de ladite machine en fonction de la vitesse d'avancement mesurée.

Dans cette application, le système de vision artificielle 4-4 disposé de part et d'autre de la haie fructifère HF avance le long de celle-ci (selon flèche AV) ce qui génère des informations qui sont analysées par le système électronique 7, afin de définir la vitesse d'avancement de la machine munie dudit système de vision. Lorsque le système électronique a défini la vitesse d'avancement, il envoie une consigne électrique à la valve de régulation de débit 11 qui laisse passer un débit d'huile hydraulique afin d'alimenter les moteurs hydraulique 12 qui, par une liaison mécanique, entraînent en rotation les organes tournants 5 des outils de taille. La consigne électrique est ajustée jusqu'à ce qu'un capteur de vitesse de rotation 13 affecté à la mesure de la rotation des outils tournants 5, indique au système électronique 7 une vitesse de rotation développée proche de la vitesse d'avancement de la machine. Cet agencement permet de faire un asservissement en boucle fermée avec le système électronique d'analyse, afin de réguler la vitesse de rotation des outils tournants 5 en fonction de la vitesse d'avancement de la machine 2.

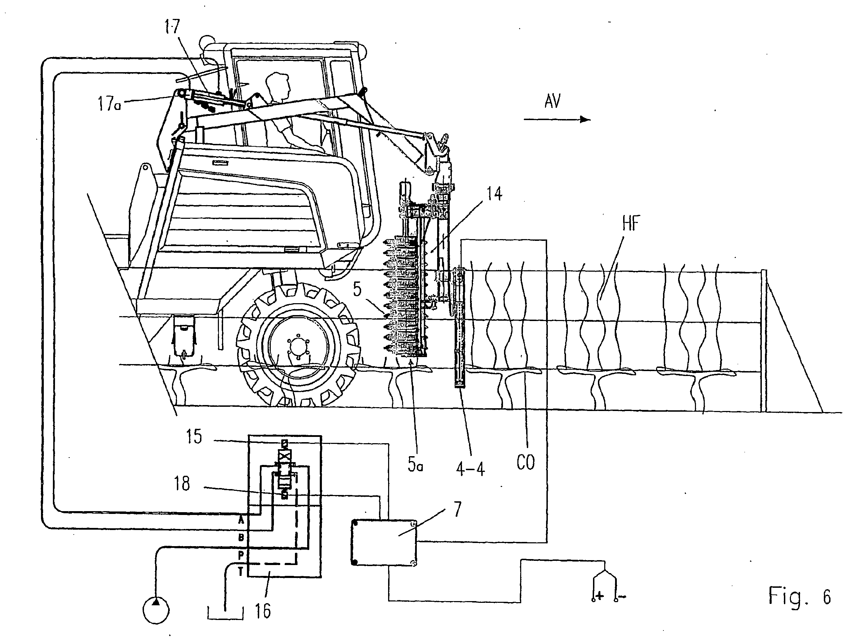

La figure 6 illustre le réglage du positionnement des ensembles de taille de la machine par rapport au cordon d'un rang de vigne palissée cultivée en cordon.

On voit le système de vision artificielle installé à l'avant de l'ensemble de taille de la machine constitué de deux empilages 14 d'outils tournants 5. Ledit système disposé de part et d'autre du rang de vigne HF avance le long de celui-ci (selon flèche AV) ce qui génère des informations qui sont analysées par le système électronique d'analyse 7 afin de reconnaître et de définir la position du cordon Co, par rapport aux ensembles de taille 14. Une fois cette analyse réalisée, le système électronique 7 envoie un courant :
- 1/ soit, si le cordon Co est trop bas par rapport aux ensembles de coupe 14, vers la bobine de commande 15 d'un électro-distributeur 16 permettant le passage du fluide hydraulique vers la chambre arrière 17a d'un vérin 17 qui par une action mécanique fera descendre lesdits ensembles de coupe 14, jusqu'à ce que le cordon soit reconnu et se trouve à la position souhaitée par rapport aux ensembles de coupe ;
- 2/ soit, si le cordon Co est trop haut par rapport aux ensembles de coupe 14, vers la bobine de commande 18 de l'électro-distributeur 16 autorisant le passage du fluide hydraulique vers la chambre avant du vérin 17 qui par une action mécanique, fait remonter les ensembles de coupe 14, jusqu'à ce que la position du cordon Co par rapport à ces derniers soit correcte.

La position initiale souhaitée des ensembles de coupe 14 par rapport au cordon Co est préalablement fixée. Ce positionnement préalable est réalisé par un réglage de la position des modules émetteur ME et récepteur MR du système de vision 4-4 par rapport aux ensembles de coupe 14, au moyen d'un dispositif de fixation réglable desdits modules sur les éléments 3a du châssis 3 de la machine, comme indiqué précédemment.

On décrit ci-après le fonctionnement du système de vision artificielle dans les différentes applications de l'invention.

### A - Discrimination des piquets et de la végétation.

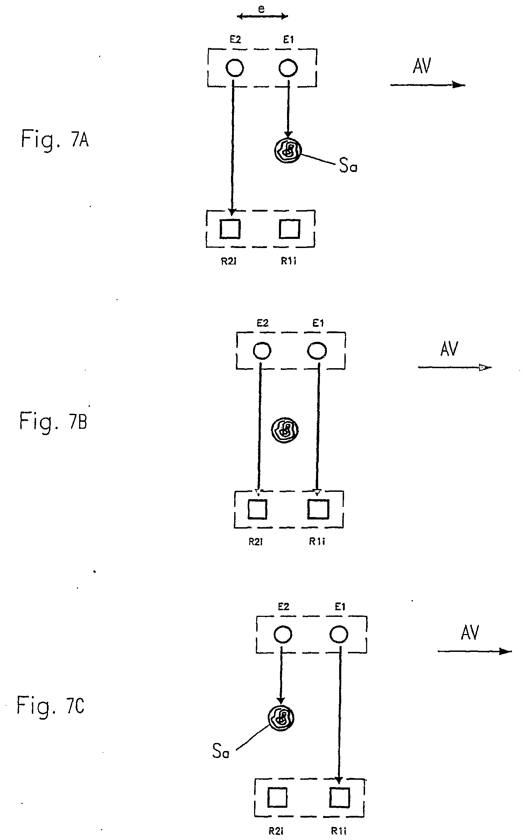

### A.1 Identification de la végétation (figures 7A, 7B et 7C)

Compte tenu du fait que le procédé et le dispositif de l'invention sont plus spécialement destinés à équiper des machines appelées à se déplacer dans les vignes, on utilise, dans la suite de la description, le terme "sarment" pour désigner la végétation, ce mot devant toutefois être considéré comme l'équivalent du terme "rameau" désignant généralement les petites branches des plantes ou arbustes.

Un sarment Sa a un diamètre inférieur à la distance "e" entre les émetteurs E1 et E2. Il coupe successivement le faisceau E1-R1i puis le faisceau E2-R2i.

Lorsque la machine avance (flèches AV) la séquence d'évènements caractéristiques de la présence d'un sarment est la suivante :
a) le sarment Sa coupe le faisceau E1-R1i (figure 7A)
b) le sarment ne coupe aucun faisceau (figure 7B)
c) le sarment coupe le faisceau E2-R2i (figure 7C).

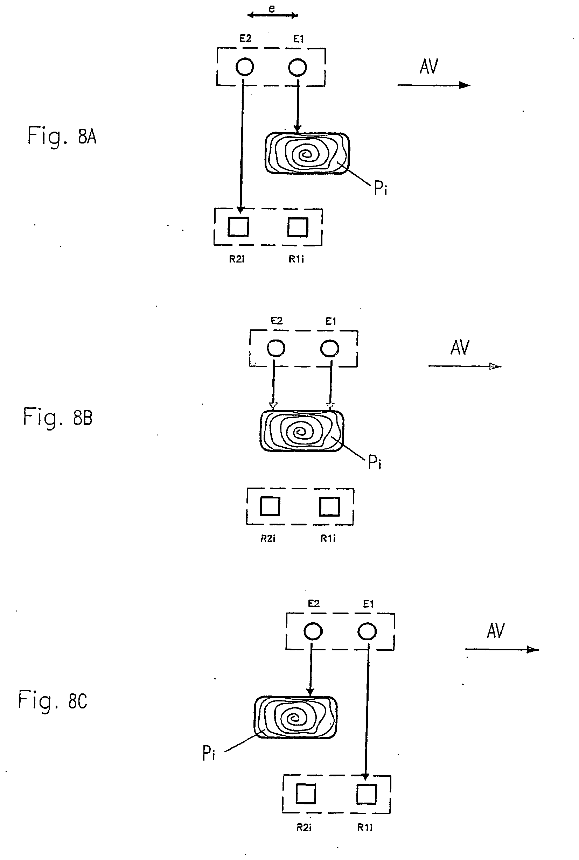

### A.2 Identification d'un piquet (figures 8A, 8B et 8C)

Un piquet Pi a une largeur apparente supérieure à la distance "e" ménagée entre les émetteurs E1 et E2. Il coupe simultanément les faisceaux E1-R1i et E2-R2i.

Lorsque la machine avance, la séquence d'événements caractéristique de la présence d'un piquet est la suivante :
a) le piquet Pi coupe seulement le faisceau E1-R1i (figure 8A)
b) le piquet coupe les faisceaux E1-R1i et E2-R2i (figure 8B)
c) le piquet coupe seulement le faisceau E2-R2i (figure 8C)

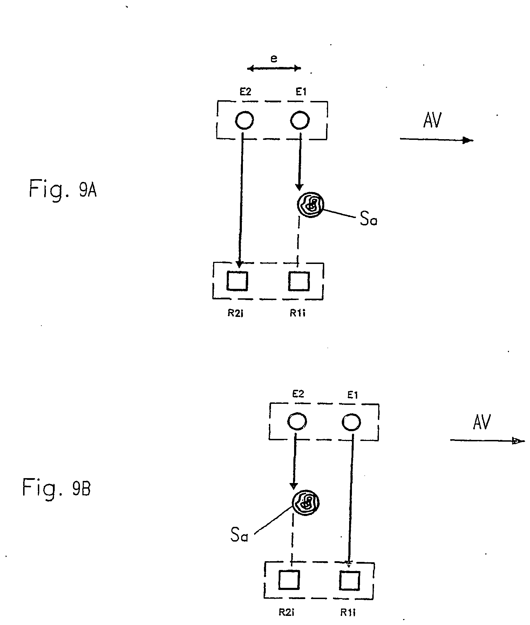

### B - Mesure de la vitesse d'avancement de la machine (figures 9A, 9B)

La vitesse d'avancement de la machine est mesurée sur la végétation et sur les piquets.

### B.1 Mesure de la vitesse sur la végétation

a) à l'instant t1, le sarment Sa coupe le faisceau E1-R1i (figure 9A)
b) à l'instant t2, le sarment coupe le faisceau E2-R2i (figure 9B)

Entre t1 et t 2, la machine a parcouru la distance e.

La vitesse d'avancement V de la machine vaut e/(t2 - t1)

### B.2 Mesure de la vitesse sur les piquets

La mesure de la vitesse sur les piquets s'opère de façon identique à la mesure de la vitesse sur la végétation.

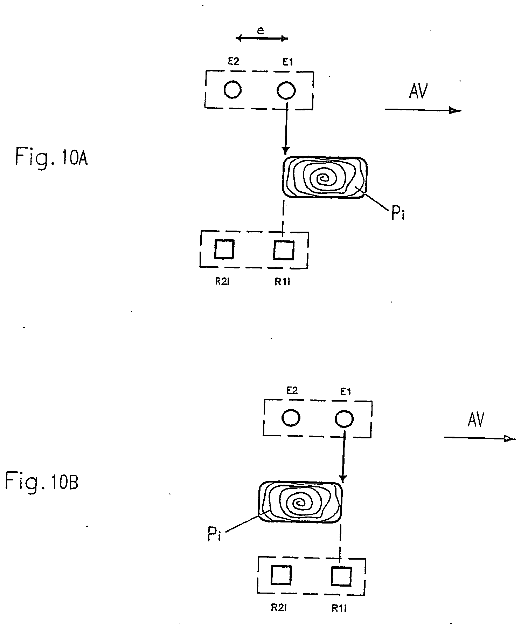

### C - Mesure de la largeur apparente des piquets (figures 10A et 10B).

On connaît la vitesse d'avancement V de la machine et on a identifié un piquet Pi en procédant comme indiqué précédemment.

### C.1 Mesure de la largeur du piquet avec le faisceau avant E1-R1i

a) à l'instant t1, le piquet Pi commence à couper le faisceau E1-R1i (figure 10A)
b) à l'instant t2, le piquet cesse de couper le faisceau E1-R1i (figure 10B)

Entre l'instant t1 et l'instant t2, la machine a parcouru la distance L à la vitesse V. La largeur du piquet Pi vaut L = (t2 - t1)*V.

### C.2 Mesure de la largeur du piquet avec le faisceau arrière E2-R2i

La largeur du piquet est mesurée de la même façon que ci-dessus avec le faisceau arrière E2-R2i.

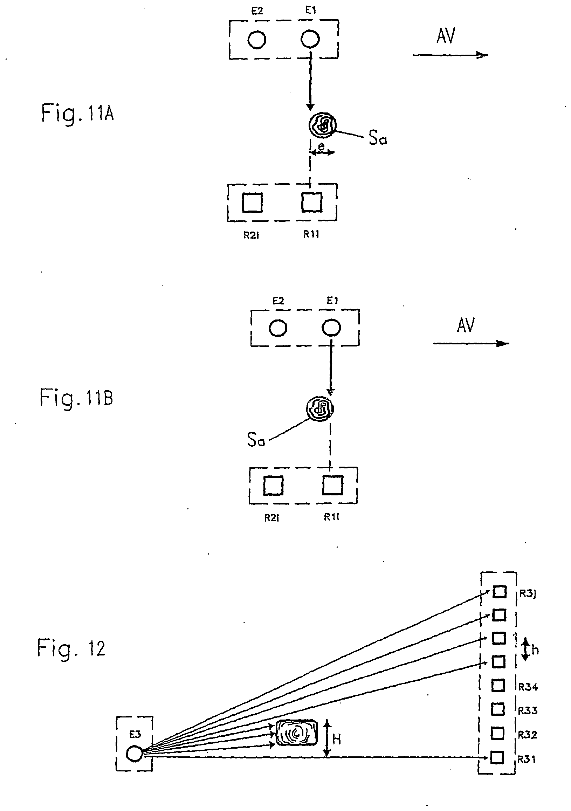

### D - Mesure de la vigueur de la végétation (figures 11A, 11B)

La mesure du diamètre de tous les sarments sur une hauteur correspondant à celle des rangées verticales de récepteurs avant R11-R1i et arrière R21-R2i, permet de déduire la vigueur de la végétation, grâce à une table de corrélation.

On connaît la vitesse d'avancement V de la machine et on a identifié un sarment Sa, en procédant comme indiqué précédemment.

### D.1 Mesure du diamètre du sarment avec le faisceau avant E1-R1i :

a) à l'instant t1, le sarment Sa commence à couper le faisceau E1-R1i (figure 11A)
b) à l'instant t2, le sarment cesse de couper le faisceau E1-R1i (figure 11B)

Entre l'instant t1 et l'instant t2, la machine a parcouru une distance d à vitesse V. Le diamètre du sarment vaut d = (t2 - t1)*V.

### D.2 Mesure du diamètre du sarment avec le faisceau arrière E2-R2i

Le diamètre du sarment est mesuré de la même façon que ci-dessus, avec le faisceau arrière E2-R2i.

### E - Mesure de la position du cordon par rapport à l'outil de coupe inférieur 5a de l'ensemble de coupe 14 de la machine.

### E.1 Identification du cordon (figure 12)

Le cordon Co se distingue d'un piquet ou d'un sarment en ce qu'il occulte de manière constante, lorsque la machine avance, un ou plusieurs faisceaux E3-R31, E3-R32, E3-R33, ...

### E.2 Position du cordon par rapport à l'outil inférieur

On considère que selon un mode de construction préférentiel :
- le faisceau horizontal inférieur E3-R31 définit la position de référence nulle ;
- le cordon Co se trouve à mi-chemin entre le module émetteur ME et le module récepteur MR (outil de coupe centré sur le rang de vigne) ;
- le module émetteur ME et le module récepteur MR sont solidaires de l'ensemble de coupe 14 ;
- les récepteurs R31, R32, R33, R3j... sont espacés verticalement de la même distance h.

La position du haut du cordon est donnée par le plus haut faisceau occulté (le faisceau d'indice k = 4, sur l'exemple illustré à la figure 12).

La hauteur du dessus du cordon, par rapport au faisceau de référence E3-R31 est égale à : H = (k-1)*h/2.

## Revendications

1. Procédé d'analyse de la structure, dans les plantations palissées, de rangs de vigne comprenant des piquets (Pi), adapté à une machine mobile en déplacement continu dans lesdits rangs de vigne, **caractérisé en ce que** le procédé utilise un système de vision artificielle (4) fonctionnant en transmission directe et comprenant, d'une part, au moins un émetteur avant (E1) et un émetteur arrière (E2) de rayons lumineux, et, d'autre part, au moins un récepteur avant (R11, R12, R13, ...) et un récepteur arrière (R21, R22, R23, ...) de rayons lumineux, en considérant le sens d'avancement de la machine équipée de ce système de vision, ledit système de vision permettant de déterminer les occultations de lumière entre lesdits émetteurs et récepteurs de rayons lumineux placés face à face, de part et d'autre du rang de vigne, **en ce que** chaque émetteur avant et arrière émet, en alternance, par exemple pendant une durée de l'ordre de 500 µs, une lumière modulée, à une fréquence correspondant à la fréquence d'accord des récepteurs avant et arrière respectivement, **en ce que** les informations générées par ces occultations de lumière sont traitées par un système électronique d'analyse (7) programmé ou configuré pour examiner les éléments de la structure du rang de vigne, et cela aussi bien de jour que de nuit, et **en ce que** l'on s'affranchit de l'influence de la lumière solaire parasite en utilisant une lumière modulée périodiquement par les émetteurs, les récepteurs n'étant sensibles qu'à la lumière modulée et non à la composante continue de la lumière et/ou l'on réduit l'importance de la lumière solaire parasite en choisissant des longueurs d'onde d'émission et de réception pour lesquelles la lumière solaire est relativement faible, c'est-à-dire en dehors du spectre visible, soit une longueur d'onde inférieure à 400 nm ou supérieure à 750 nm et, par exemple, de l'ordre de 950 nm.

2. Procédé selon la revendication 1, **caractérisé en ce que** le système électronique d'analyse est programmé ou configuré pour traiter les informations générées par les occultations de lumière, afin de mesurer la vitesse d'avancement de la machine et d'ajuster la vitesse de rotation des outils de ladite machine, en fonction de la vitesse d'avancement mesurée.

3. Procédé selon l'une quelconque des revendications 1 à 2, **caractérisé en ce que** le système électronique d'analyse est programmé ou configuré pour traiter les informations générées par les occultations de lumière, afin de discriminer les piquets du rang de vigne.

4. Procédé selon l'une quelconque des revendications 1 à 3, **caractérisé en ce que**, pour les vignes cultivées en cordon (Co), le système électronique d'analyse est programmé ou configuré pour traiter les informations générées par les occultations de lumière, afin de détecter la position du cordon (Co).

5. Procédé selon l'une quelconque des revendications 1 à 4, **caractérisé en ce que** le système électronique d'analyse est programmé ou configuré pour traiter les informations générées par les occultations de lumière, afin d'effectuer une mesure de la vigueur des plantes.

6. Procédé selon l'une quelconque des revendications 1 à 5, **caractérisé en ce que** l'on dispose le système de vision artificielle (4) en avant de la tête de travail d'une machine appelée à travailler en continu dans les plantations palissées.

7. Dispositif d'analyse de la structure, dans les plantations palissées, de rangs de vigne comprenant des piquets (Pi), pour l'équipement des machines mobiles appelées à travailler en continu dans lesdits rangs de vigne, **caractérisé en ce qu'**il comprend un système de vision artificielle (4) fonctionnant en transmission directe et comprenant : - d'une part, un module émetteur (ME) de rayons lumineux constitué d'au moins un émetteur avant (E1) et d'un émetteur arrière (E2), et, d'autre part, un module récepteur (MR) de rayons lumineux constitué d'au moins un récepteur avant (R11, R12, R13, ...) et d'un récepteur arrière (R21, R22, R23, ...), en considérant le sens d'avancement de la machine équipée de ce système de vision, la distance (e) séparant l'émetteur avant (E1) et l'émetteur arrière (E2) étant inférieure à la largeur desdits piquets (Pi), ce système de vision artificielle étant agencé de sorte que lorsqu'il est monté sur une machine, un ou plusieurs de ses composants optoélectroniques puisse(nt) être disposé(s) face à face, de part et d'autre du rang de vigne enjambé par cette dernière, ledit dispositif comprenant encore un système électronique d'analyse programmé (7) ou configuré pour traiter les informations générées par les occultations de lumière, pour visualiser et analyser les éléments du rang de vigne, et cela aussi bien de jour que de nuit, **en ce que** l'on s'affranchit de l'influence de la lumière solaire parasite en utilisant une lumière modulée périodiquement par les émetteurs, les récepteurs n'étant sensibles qu'à la lumière modulée et non à la composante continue de la lumière et **en ce que** le faisceau lumineux issu du système de vision artificielle (4) est proche de 950 nm et chaque récepteur est sensible à tout faisceau incident ayant une longueur d'onde d'environ 950 nm.

8. Dispositif selon la revendication 7, **caractérisé en ce que** le module récepteur (MR) comprend au moins une rangée verticale avant constituée de plusieurs récepteurs espacés (R11, R12, R13,...) et au moins une rangée verticale arrière constituée de plusieurs récepteurs espacés (R21, R22, R23,...), chaque émetteur avant (E1) et arrière (E2) étant conçu pour émettre, en alternance, par exemple pendant une durée de l'ordre de 500 µs, une lumière modulée, à une fréquence correspondant à la fréquence d'accord des rangées verticales de récepteurs avant (R11, R12, R13, ...) et arrière (R21, R22, R23, ...), respectivement.

9. Dispositif selon la revendication 8, **caractérisé en ce que** le module récepteur (MR) comprend une troisième rangée verticale de récepteurs (R31, R32, R33, ...) dont le récepteur inférieur (R31) se trouve placé en partie basse dudit module récepteur (MR), et **en ce que** le module émetteur (MF) comporte, en partie basse, un émetteur (E3) conçu pour émettre, par exemple toutes les 500 µs, une lumière à une fréquence correspondant à la fréquence d'accord des récepteurs (R31, R32, R33, ...) de ladite troisième rangée.

10. Dispositif selon l'une des revendications 8 ou 9, **caractérisé en ce que** le système électronique d'analyse est programmé ou configuré pour traiter les informations générées par les occultations de lumière, afin de mesurer la vitesse d'avancement de la machine.

11. Dispositif selon l'une quelconque des revendications 7 à 10, **caractérisé en ce que** le système électronique d'analyse est programmé ou configuré pour traiter les informations générées par les occultations de lumière, afin de discriminer les piquets du rang de vigne.

12. Dispositif selon l'une quelconque des revendications 7 à 11, **caractérisé en ce que**, pour les vignes cultivées en cordon (Co), le système électronique d'analyse est programmé ou configuré pour traiter les informations générées par les occultations de lumière, afin de détecter la position du cordon (Co).

13. Dispositif selon l'une quelconque des revendications 7 à 12, **caractérisé en ce que** le système électronique d'analyse est programmé ou configuré pour traiter les informations générées par les occultations de lumière, afin d'effectuer une mesure de la vigueur des plantes.

14. Dispositif selon l'une quelconque des revendications 7 à 13, **caractérisé en ce que** les modules émetteurs (ME) et récepteurs (MR) du système de vision artificielle (4), sont fixés sur le châssis (3-3a) de la machine, à l'aide de moyens permettant un réglage de leur position, principalement en hauteur, par rapport audit châssis.

15. Dispositif suivant l'une quelconque des revendications 7 à 14, applicable aux machines de prétaillage, **caractérisé en ce que** le système électronique d'analyse (7) est connecté à l'électro-distributeur (9) de commande du vérin (6) qui assure l'écartement et le rapprochement des éléments de taille (5) de la tête de coupe desdites machines.

16. Dispositif selon l'une quelconque des revendications 7 à 15, pour la mise en oeuvre du procédé selon la revendication 3 dans le cas dudit procédé où l'on s'affranchit de l'influence de la lumière solaire parasite en utilisant une lumière modulée périodiquement par les émetteurs, où les récepteurs ne sont sensibles qu'à la lumière modulée et non à la composante continue de la lumière et où l'on choisit des longueurs d'onde d'émission et de réception en dehors du spectre visible, applicable aux machines de prétaillage, **caractérisé en ce que** le système électronique d'analyse (7) est connecté à la valve de régulation de débit (11) du circuit hydraulique d'alimentation des moteurs hydrauliques (12) assurant l'entraînement en rotation des outils de coupe tournants (5), dont la vitesse de rotation est indiquée audit système électronique d'analyse (7) par un capteur de rotation (13) affecté à la mesure de cette vitesse, ce qui permet de faire un asservissement en boucle fermée avec le système électronique d'analyse, afin de réguler la vitesse de rotation desdits outils (5) en fonction de la vitesse d'avancement de la machine (2).

17. Dispositif suivant l'une quelconque des revendications 7 à 16, pour la mise en oeuvre du procédé selon la revendication 5 dans le cas dudit procédé où l'on s'affranchit de l'influence de la lumière solaire parasite en utilisant une lumière modulée périodiquement par les émetteurs, où les récepteurs ne sont sensibles qu'à la lumière modulée et non à la composante continue de la lumière et où l'on choisit des longueurs d'onde d'émission et de réception en dehors du spectre visible, applicable aux machines de prétaillage, **caractérisé en ce que** le système électronique d'analyse (7) est connecté à un électrodistributeur (16) de commande d'un vérin (17) assurant les mouvements verticaux des ensembles de taille (14) desdites machines.

18. Dispositif selon l'une quelconque des revendications 7 à 17, pour la mise en oeuvre du procédé suivant la revendication 6 dans le cas dudit procédé où l'on s'affranchit de l'influence de la lumière solaire parasite en utilisant une lumière modulée périodiquement par les émetteurs, où les récepteurs ne sont sensibles qu'à la lumière modulée et non à la composante continue de la lumière et où l'on choisit des longueurs d'onde d'émission et de réception en dehors du spectre visible, **caractérisé en ce que** le système électronique d'analyse (7) est connecté à un ordinateur capable de gérer les données permettant la détermination de la vigueur des plantes.

19. Dispositif suivant l'une quelconque des revendications 7 à 18, **caractérisé en ce que** le système de vision artificielle (4), est monté en avant de la tête de travail (1) d'une machine appelée à travailler en continu dans les plantations palissées.

## Patentansprüche

1. Verfahren zur Analyse der Struktur von Weinrebenreihen in Spalierpflanzungen umfassend Pflöcke (Pi), angepasst an eine bewegliche Maschine in durchgehender Bewegung in den besagten Weinrebenreihen, **dadurch gekennzeichnet, dass** das Verfahren ein künstliches Sichtsystem (4) verwendet, das mit direkter Übertragung arbeitet und umfassend einerseits mindestens einen vorderen Sender (E1) und einen rückwärtigen Sender (E2) für Lichtstrahlen und andererseits mindestens einen vorderen Empfänger (R11, R12, R13, ...) und einen rückwärtigen Empfänger (R21, R22, R23, ...) für Lichtstrahlen, wobei die Vorschubrichtung der mit diesem Sichtsystem ausgestatteten Maschine berücksichtigt wird, wobei das besagte Sichtsystem es ermöglicht die Verdunkelung von Licht zwischen den besagten Lichtstrahlensendern und Lichtstrahlenempfängern zu ermitteln, die einander gegenüberliegend zu beiden Seiten der Pflanzenreihe platziert sind, wobei jeder vordere und rückwärtige Sender dafür ausgelegt ist, abwechselnd, zum Beispiel während einer Dauer in der Größenordnung von 500 µs, ein moduliertes Licht mit einer Frequenz auszusenden, die jeweils der Abstimmfrequenz der vertikalen Reihen der vorderen und der rückwärtigen Empfänger entspricht und dadurch, dass die durch diese Lichtverdunkelungen generierten Informationen von einem elektronischen Analysesystem (7) verarbeitet werden, das dafür dafür programmiert oder konfiguriert ist, die Elemente der Struktur der Pflanzenreihe zu untersuchen, und zwar sowohl tagsüber als auch nachts, wobei man sich vom Einfluss des parasitären Sonnenlichts befreit, indem ein durch die Sender periodisch moduliertes Licht verwendet wird, wobei die Empfänger nur für das modulierte Licht empfindlich sind und nicht für den Gleichanteil des Lichts und/oder man die Bedeutung des parasitären Sonnenlichts reduziert, indem Emissions- und Empfangswellenlängen gewählt werden, bei denen das Sonnenlicht relativ schwach ist, d.h. außerhalb des sichtbaren Spektrums, also eine Wellenlänge, die kleiner als 400 nm oder größer als 750 nm ist und beispielsweise in der Größenordnung von 950 nm.

2. Verfahren nach Anspruch 1, **dadurch gekennzeichnet, dass** das elektronische Analysesystem dafür programmiert oder konfiguriert ist, die Informationen zu verarbeiten, die durch die Lichtverdunkelungen generiert werden, um die Vorschubgeschwindigkeit der Maschine zu messen und die Drehgeschwindigkeit der Werkzeuge der Maschine in Abhängigkeit von der gemessenen Vorschubgeschwindigkeit anzupassen.

3. Verfahren nach einem der Ansprüche 1 bis 2, **dadurch gekennzeichnet, dass** das elektronische Analysesystem dafür programmiert oder konfiguriert ist, die Informationen zu verarbeiten, die durch die Lichtverdunkelungen generiert werden, um die Pflöcke der Weinrebenreihe zu unterscheiden.

4. Verfahren nach einem der Ansprüche 1 bis 3, **dadurch gekennzeichnet, dass** für für Weinreben, die entlang einer Schnur (Co) kultiviert werden das elektronische Analysesystem dafür programmiert oder konfiguriert ist, die Informationen zu verarbeiten, die durch die Lichtverdunkelungen generiert werden, um die Position der Schnur (Co) zu erfassen.

5. Verfahren nach einem der Ansprüche 1 bis 4, **dadurch gekennzeichnet, dass** das elektronische Analysesystem dafür programmiert oder konfiguriert ist, die Informationen zu verarbeiten, die durch die Lichtverdunkelungen generiert werden, um eine Messung der Stärke der Pflanzen vorzunehmen.

6. Verfahren nach einem der Ansprüche 1 bis 5, **dadurch gekennzeichnet, dass** man das künstliche Sichtsystem (4) vor dem Arbeitskopf einer Maschine anordnet, die dazu bestimmt ist, in Durchläufen in den Spalierpflanzungen zu arbeiten.

7. Vorrichtung zur Analyse der Struktur von Weinrebenreihen in Spalierpflanzungen umfassend Pflöcke (Pi) für die Ausrüstung von beweglichen Maschinen, die dazu bestimmt sind, in kontinuierlichen Durchläufen in Weinrebenreihen zu arbeiten, **dadurch gekennzeichnet, dass** sie ein künstliches Sichtsystem (4) verwendet, das mit direkter Übertragung arbeitet und folgendes umfasst: - einerseits ein Sendermodul (ME), das aus mindestens einem vorderen Sender (E1) und einem rückwärtigen Sender (E2) gebildet ist, und andererseits ein Empfängermodul (MR), das aus mindestens einem vorderen Empfänger (R11, R12, R13, ...) und einem rückwärtigen Empfänger (R21, R22, R23, ...) gebildet ist, wobei die Vorschubrichtung der Maschine, die mit diesem Sichtsystem ausgestattet ist, berücksichtigt wird, wobei der Abstand (e), der den vorderen Sender (E1) und den rückwärtigen Sender (E2) voneinander trennt, kleiner als die Breite der Pflöcke (Pi) des Spaliers der Früchte tragenden Pflanzenreihe ist, wobei das künstliche Sichtsystem angeordnet sein, so dass, wenn sie an einer Maschine montiert ist, eine oder mehrere ihrer optoelektronischen Komponenten sein können, auf beiden Seiten der von diesem aufgespannten Pflanzenreihe angeordnet sind, wobei die Vorrichtung ferner ein elektronisches System (7) aufweist, das programmiert oder konfiguriert ist, um die durch die Verdunkelung des Lichts erzeugte Information zu verarbeiten, um die Elemente der Planzenreihe zu visualisieren und zu analysieren, und dies sowohl bei Tag als auch in der Nacht, wobei im künstlichen Sichtsystem der Einfluss des parasitären Sonnenlichts überwunden wird, indem ein von den Sendern periodisch moduliertes Licht verwendet wird, wobei die Empfänger nur für moduliertes Licht empfindlich sind und nicht für den Gleichanteil des Lichts und dass der Lichtstrahl des künstlichen Sichtsystems (4) nahe bei 950 nm liegt und jeder Empfänger für jeden einfallenden Lichtstrahl mit einer Wellenlänge von etwa 950 nm empfindlich ist.

8. Vorrichtung nach Anspruch 7, **dadurch gekennzeichnet, dass** das Empfängermodul (MR) mindestens eine vertikale vordere Reihe, die aus mehreren beabstandeten Empfängern (R11, R12, R13, ...) gebildet wird, und mindestens eine vertikale rückwärtige Reihe umfasst, die aus mehreren beabstandeten Empfängern (R21, R22, R23, ...) gebildet ist, wobei jeder vordere (E1) und rückwärtige Sender (E2) dafür ausgelegt ist, abwechselnd, zum Beispiel während einer Dauer in der Größenordnung von 500 µs, ein moduliertes Licht mit einer Frequenz auszusenden, die jeweils der Abstimmfrequenz der vertikalen Reihen der vorderen (R11, R12, R13, ...) und der rückwärtigen Empfänger (R21, R22, R23, ...) entspricht.

9. Vorrichtung nach Anspruch 8, **dadurch gekennzeichnet, dass** das Empfängermodul (MR) eine dritte vertikale Reihe von Empfängern (R31, R32, R33, ...) umfasst, dessen unterer Empfänger (R31) am unteren Teil des Empfängermoduls (MR) platziert ist, und dadurch, dass das Sendermodul (MF) am unteren Teil einen Sender (E3) umfasst, der dafür ausgelegt ist, zum Beispiel alle 500 µs ein Licht mit einer Frequenz auszusenden, die der Abstimmfrequenz der Empfänger (R31, R32, R33, ...) der dritten Reihe entspricht.

10. Vorrichtung nach einem der Ansprüche 8 oder 9, **dadurch gekennzeichnet, dass** das elektronische Analysesystem dafür programmiert oder konfiguriert ist, die Informationen zu verarbeiten, die durch die Lichtverdunkelungen generiert werden, um die Vorschubgeschwindigkeit der Maschine zu messen.

11. Vorrichtung nach einem der Ansprüche 7 bis 10, **dadurch gekennzeichnet, dass** das elektronische Analysesystem dafür programmiert oder konfiguriert ist, die Informationen zu verarbeiten, die durch die Lichtverdunkelungen generiert werden, um die Pflöcke der Weinpflanzenreihe zu unterscheiden.

12. Vorrichtung nach einem der Ansprüche 7 bis 11, **dadurch gekennzeichnet, dass** für Weinreben, die entlang einer Schnur (Co) kultiviert werden, wobei das elektronische Analysesystem dafür programmiert oder konfiguriert ist, die Informationen zu verarbeiten, die durch die Lichtverdunkelungen generiert werden, um die Position der Schnur (Co) zu erfassen.

13. Verfahren nach einem der Ansprüche 7 bis 12, **dadurch gekennzeichnet, dass** das elektronische Analysesystem dafür programmiert oder konfiguriert ist, die Informationen zu verarbeiten, die durch die Lichtverdunkelungen generiert werden, um eine Messung der Stärke der Pflanzen vorzunehmen.

14. Vorrichtung nach einem der Ansprüche 7 bis 13, **dadurch gekennzeichnet, dass** die Sender- (ME) und Empfängermodule (MR) des künstlichen Sichtsystems (4) auf dem Fahrgestell (3 - 3a) der Maschine mithilfe von Mitteln befestigt sind, die ein Einstellen ihrer Position, in erster Linie in der Höhe, in Bezug auf das Fahrgestell gestatten.

15. Vorrichtung nach einem der Ansprüche 7 bis 14, die auf Vorschneider-Maschinen anwendbar ist, **dadurch gekennzeichnet, dass** das elektronische Analysesystem (7) mit der Elektroverteilersteuerung (9) des Zylinders (6) verbunden ist, der das Abrücken und Annähern der Schneidelemente (5) des Schneidkopfs der Maschinen sicherstellt.

16. Vorrichtung nach einem der Ansprüche 7 bis 15 für die Ausführung des Verfahrens nach Anspruch 3, wobei im künstlichen Sichtsystem der Einfluss des parasitären Sonnenlichts überwunden wird, indem ein von den Sendern periodisch moduliertes Licht verwendet wird, wobei die Empfänger nur für moduliertes Licht empfindlich sind und nicht für den Gleichanteil des Lichts und man die Wellenlänge des Lichts in einem Bereich außerhalb des sichbaren Lichts verwendet, die bei Vorschneider-Maschinen verwendbar ist, **dadurch gekennzeichnet, dass** das elektronische Analysesystem (7) mit dem Leistungsregelventil (11) des Hydraulikversorgungskreislaufs der Hydraulikmotoren (12) verbunden ist, die den Drehantrieb der umlaufenden Schneidewerkzeuge (5) sicherstellen, deren Drehgeschwindigkeit dem elektronischen Analysesystem (7) über einen Drehsensor (13) angegeben wird, der zur Messung dieser Geschwindigkeit vorgesehen ist, wodurch eine Regelung in einem geschlossenen Kreis mit dem elektronischen Analysesystem vorgenommen werden kann, um die Drehgeschwindigkeit der Werkzeuge (5) in Abhängigkeit von der Vorschubgeschwindigkeit der Maschine (2) zu regeln.

17. Vorrichtung nach einem der Ansprüche 7 bis 16 für die Ausführung des Verfahrens nach Anspruch 5, wobei im künstlichen Sichtsystem der Einfluss des parasitären Sonnenlichts überwunden wird, indem ein von den Sendern periodisch moduliertes Licht verwendet wird, wobei die Empfänger nur für moduliertes Licht empfindlich sind und nicht für den Gleichanteil des Lichts und man die Wellenlänge des Lichts in einem Bereich außerhalb des sichbaren Lichts verwendet, die bei Vorschneider-Maschinen verwendbar ist, **dadurch gekennzeichnet, dass** das elektronische Analysesystem (7) mit einer Elektroverteilersteuerung (16) eines Zylinders (17) verbunden ist, der die vertikalen Bewegungen der Schneideinheiten (14) der Maschinen sicherstellt.

18. Vorrichtung nach einem der Ansprüche 7 bis 17 für die Ausführung des Verfahrens nach Anspruch 6, wobei im künstlichen Sichtsystem der Einfluss des parasitären Sonnenlichts überwunden wird, indem ein von den Sendern periodisch moduliertes Licht verwendet wird, wobei die Empfänger nur für moduliertes Licht empfindlich sind und nicht für den Gleichanteil des Lichts und man die Wellenlänge des Lichts in einem Bereich außerhalb des sichbaren Lichts verwendet, die bei Vorschneider-Maschinen verwendbar ist, **dadurch gekennzeichnet, dass** das elektronische Analysesystem (7) an einen Computer angeschlossen ist, der fähig ist, die Daten zu verwalten, die eine Bestimmung der Stärke der Pflanzen gestatten.

19. Vorrichtung nach einem der Ansprüche 7 bis 18, **dadurch gekennzeichnet, dass** das künstliche Sichtsystem (4) vor dem Arbeitskopf (1) einer Maschine angebracht ist, die dazu bestimmt ist, in Durchläufen in den Spalierpflanzungen zu arbeiten.

## Claims

1. A process for analysis of the structure, in espalier-trained plantations, of rows of vines including stakes (Pi), adapted to a machine which is mobile in continuous displacement in said rows of vines, **characterised in that** the process uses an artificial vision system (4) operating in a direct transmission mode and comprising, on the one hand, at least one front (E1) light beam emitter and one rear (E2) light beam emitter, and, on the other hand, at least one front (R11, R12, R13, ...) light beam receiver and one rear (R21, R22, R23, ...) light beam receiver, when considering the direction of advance movement of the machine fitted with that vision system, said vision system making it possible to determine blockages of light between said emitters and receivers of light beams in mutually facing relationship on either side of the row of vines, **in that** each front and rear emitter emits alternately for example over a period in the order of 500 µs, a modulated light, at a frequency corresponding to the tuning frequency of the front and rear receivers respectively, **in that** the information produced by these blockages of light is processed by an electronic analysis system (7) programmed or configured to examine the elements of the structure of the row of vines both by day and at night, and **in that** the influence of interfering solar light is eliminated by using light periodically modulated by the emitters, the receivers only being sensitive to the modulated light and not to the continuous component of the light and/or the importance of the interfering solar light is reduced by selecting emission and reception wavelengths for which the solar light is relatively weak, that is to say outside the visible spectrum, either a wavelength of less than 400 nm or greater than 750 nm and for example of the order of 950 nm.

2. A process according to claim 1, **characterised in that** the electronic analysis system is programmed or configured to process the information generated by the blockages of light in order to measure the speed of advance movement of the machine and to adjust the rotary speed of the tools of said machine as a function of the measured speed of the tools of the machine as a function of the measured speed of advance movement.

3. A process according to any one of claims 1 to 2, **characterised in that** the electronic analysis system is programmed or configured to process the information generated by the blockages of light in order to detect the stakes of the row of vines.

4. A process according to any one of claims 1 to 3, **characterised in that**, for vines cultivated in a cordon (Co), the electronic analysis system is programmed or configured to process the information generated by the blockages of light in order to detect the position of the cordon (Co).

5. A process according to any one of claims 1 to 4, **characterised in that** the electronic analysis system is programmed or configured to process the information generated by the blockages of light in order to measure the health of the plants.

6. A process according to any one of claims 1 to 5, **characterised in that** the artificial vision system (4) is arranged in front of the working head of a machine called upon to operate continuously in espalier-trained plantations.

7. Apparatus for analysis of the structure, in espalier-trained plantations, of rows of vines including stakes (Pi), for fitment to mobile machines called upon to operate continuously in said rows of vines, **characterised in that** it comprises an artificial vision system (4) operating in a direct transmission mode and comprising: - on the one hand a light beam emitter module (ME) formed by at least one front emitter (E1) and one rear emitter (E2) and on the other hand a light beam receiver module (MR) formed by at least one front receiver (R11, R12, R13, ...) and one rear receiver (R21, R22, R23,...) when considering the direction of advance movement of the machine fitted with that vision system, the distance (e) separating the front emitter (E1) and the rear emitter (E2) being less than the width of said stakes (Pi), this artificial vision system being so arranged that when it is mounted on a machine, one or more of its optoelectronic components can be disposed in mutually facing relationship on either side of the row of vines straddled thereby, said apparatus further comprising an electronic analysis system programmed (7) or configured to process the information produced by the blockages of light in order to display and analyse the elements of the row of vines both by day and at night, **in that** the influence of interfering solar light is eliminated by using light periodically modulated by the emitters, the receivers only being sensitive to the modulated light and not to the continuous component of the light, and **in that** the beam of light issued from the artificial vision system (4) is close to 950 nm and each receiver is sensitive to any incident beam having a wavelength of approximately 950 nm.

8. Apparatus according to claim 7, **characterised in that** the receiver module (MR) comprises at least one front vertical row formed by a plurality of spaced receivers (R11, R12, R13, ...) and at least one rear vertical row formed by a plurality of spaced receivers (R21, R22, R23, ...), each front emitter (E1) and rear emitter (E2) being designed to emit alternately for example over a period of the order of 500 µs modulated light at a frequency corresponding to the tuning frequency of the vertical rows of front receivers (R11, R12, R13, ...) and rear receivers (R21, R22, R23, ...) respectively.

9. Apparatus according to claim 8, **characterised in that** the receiver module (MR) comprises a third vertical row of receivers (R31, R32, R33, ...) of which the lower receiver (R31) is located in the lower part of said receiver module (MR) and **in that** the emitter module (MF) comprises, in the lower part, an emitter (E3) designed to emit for example every 500 µs light at a frequency corresponding to the tuning frequency of the receivers (R31, R32, R33, ...) of said third row.

10. Apparatus according to one of claims 8 or 9, **characterised in that** the electronic analysis system is programmed or configured to process the information generated by the blockages of light in order to measure the speed of forward movement of the machine.

11. Apparatus according to any one of claims 7 to 10, **characterised in that** the electronic analysis system is programmed or configured to process the information generated by the blockages of light in order to distinguish the stakes of the row of vines.

12. Apparatus according to any one of claims 7 to 11, **characterised in that**, for vines cultivated in a cordon (Co), the electronic analysis system is programmed or configured to process the information generated by the blockages of light in order to detect the position of the cordon (Co).

13. Apparatus according to any one of clams 7 to 12, **characterised in that** the electronic analysis system is programmed or configured to process the information generated by the blockages of light in order to measure the health of the plants.

14. Apparatus according to any one of claims 7 to 13, **characterised in that** the emitter modules (ME) and receiver modules (MR) of the artificial vision system (4) are fixed to the chassis (3-3a) of the machine using means permitting a regulation of their position, mainly in height, relative to said chassis.

15. Apparatus according to any one of claims 7 to 14, applicable to pre-pruning machines, **characterised in that** the electronic analysis system (7) is connected to the electro-distributor (9) for control of the jack (6) which provides for the away and towards movement of the pruning elements (5) of the cutting head of said machines.

16. Apparatus according to any one of claims 7 to 15 for carrying out the process according to claim 3 in the case of said process in which the influence of interfering solar light is eliminated by using light periodically modulated by the emitters, in which the receivers are only sensitive to the modulated light and not to the continuous component of the light and in which emission and reception wavelengths are selected outside the visible spectrum, applicable to pre-pruning machines, **characterised in that** the electronic analysis system (7) is connected to the flow regulating valve (11) of the hydraulic circuit for supplying the hydraulic motors (12) ensuring the rotary drive of the rotary cutting tools (5) whose speed of rotation is indicated to said electronic analysis system (7) by a rotation sensor (13) which is related to the measurement of this speed, which permits a closed loop feedback to the electronic analysis system in order to regulate the rotary speed of said rotary tools (5) as a function of the speed of advance movement of the machine (2).

17. Apparatus according to any one of Claims 7 to 16, for carrying out the process according to claim 5 in the case of said process in which the influence of interfering solar light is eliminated by using light periodically modulated by the emitters, in which the receivers are only sensitive to the modulated light and not to the continuous component of the light and in which emission and reception wavelengths are selected outside the visible spectrum, applicable to precutting machines, **characterised in that** the electronic analysis system (7) is connected to an electro-distributor (16) for control of a jack (17) that provides for the vertical movements of the pruning assemblies (14) of said machines.

18. Apparatus according to any one of claims 7 to 17, for carrying out the process according to claim 6 in the case of said process in which the influence of interfering solar light is eliminated by using light periodically modulated by the emitters, in which the receivers are only sensitive to the modulated light and not to the continuous component of the light and in which emission and reception wavelengths are selected outside the visible spectrum, **characterised in that** the electronic analysis system (7) is connected to a computer capable of producing data to determine the health of the plants.

19. Apparatus according to any one of claims 7 to 18, **characterised in that** the artificial vision system (4) is mounted in front of the working head (1) of a machine called upon to operate continuously in espalier-trained plantations.
